# EUROPEAN PATENT APPLICATION

(11) **EP 2 172 894 A1**
(43) Date of publication of application: **07.04.2010**
(21) Application number: 09252301.8
(22) Date of filing: 29.09.2009
(51) Int. Cl.: G06Q 30/00

(54) **Systems and methods for the automatic allocation of business among multiple entities**

(30) Priority: 29.09.2008 US 101026 P
(71) Applicant: RouteOne LLC, Farmington Hills, MI 48334 (US)
(72) Inventor: McMillan, Barry, Markham Ontario L3P 4B7 (CA); MacLellan, Paul, Brighton, MI 48116 (US); Goulbourne, Anthony, Mississauga Ontario L5N 8L7 (CA); Bawcum, Benjamin W., Fraser, MI 28026 (US)
(74) Representative: Lloyd, Patrick Alexander Desmond

(57) **Abstract**

Systems and methods for allocating business among a plurality of entities are provided. In some embodiments, information about the business may be communicated from a client terminal. If the business is capable of being automatically allocated, at least one relevant parameter may be processed to identify a provider with which to allocate the business. In some embodiments of the present invention, motor vehicle dealership financing application allocation techniques are used to determine financing sources, financing eligibility, financing terms, or any combination thereof in connection with the sale or leasing of motor vehicles.

## Description

### Field of the Invention

The present invention relates to systems and methods for business allocation, and more particularly, the present invention relates to automated systems and methods for making business allocation decisions according to predetermined criteria.

### Background of the Invention

In situations where multiple service providers, each providing a similar service, compete for business, a decision needs to be made by the consumer or the consumer's agent with regard to which of those service providers to use in receiving the desired service. For example, in the context of a car dealership, when a customer wants to finance the purchase of a vehicle, often times the dealership must select one of a multitude of finance sources to serve the financing needs of the customer. The decision is based on several, sometimes complicated, parameters and requires the dealership to expend time and effort into manually making the decision and then communicating information to the selected finance source.

It would therefore be desirable to provide improved systems and methods for performing business allocation decisions.

### Summary of the Invention

In view of the foregoing, systems and methods are provided for allocating business among a plurality of entities. The invention is defined by the independent claims, to which reference should be made.

In some embodiments of the present invention, information about business may be electronically received over a computer network at a central processor. The information may be communicated from a client terminal to the computer network. The information may be electronically processed at the central processor to determine whether the business is capable of being automatically allocated. If the business is capable of being automatically allocated, at least one relevant parameter may be electronically processed to identify a provider to which to allocate the business. The business may be allocated to the provider, where allocating includes electronically communicating at least a subset of the information to the provider over the computer network.

### Brief Description of the Drawings

The above and other objects and advantages of the invention will be apparent upon consideration of the following detailed description, taken in conjunction with the accompanying drawings, in which like reference characters refer to like parts throughout, and in which:

FIG. 1 shows a block diagram of an illustrative system in accordance with an embodiment of the present invention; and

FIG. 2 shows an illustrative flow diagram for identifying a finance source in accordance with an embodiment of the present invention.

### Detailed Description of the Invention

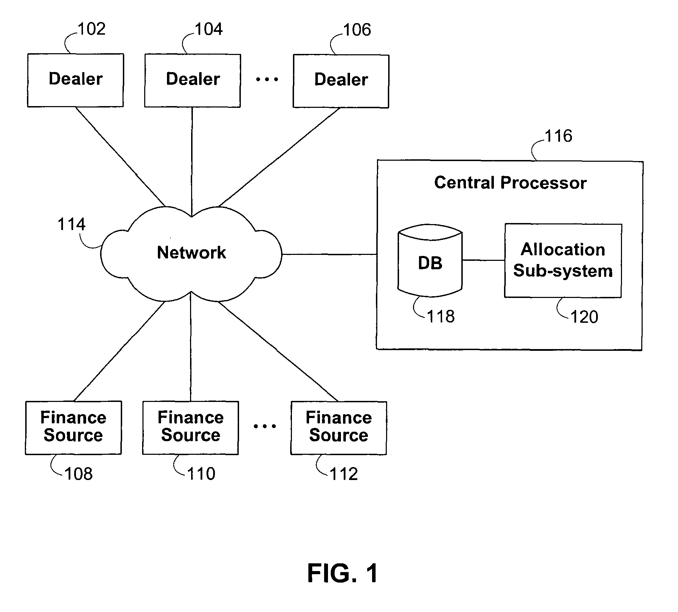

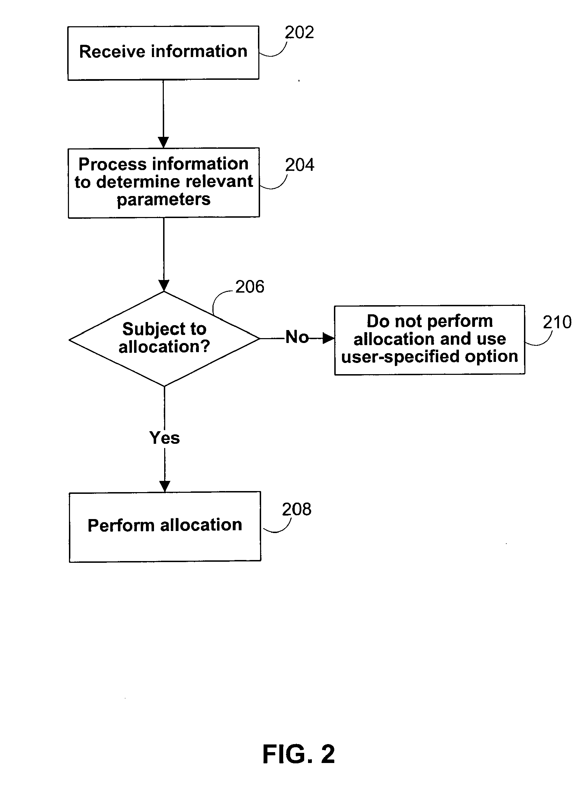

Systems and methods are provided for automatically making business allocation decisions according to predetermined criteria, and are described below with reference to FIGS. 1 and 2.

As used herein, the term "business" refers to an opportunity to engage in business relations with an entity. For example, in the context of a motor vehicle dealership, "business" may refer to, for example, the opportunity to finance the purchase of a vehicle. "Business allocation" refers to the distribution of business (either in whole or in part) among one or more entities.

For purposes of brevity and clarity, and not by way of limitation, the present invention is described herein in the context of a motor vehicle dealership financing application allocation technique that is used to determine financing sources, financing eligibility, financing terms, or any combination thereof in connection with the sale or leasing of motor vehicles. For example, FIG. 1 is a block diagram of an illustrative system 100 that may be used to implement the features of the present invention. System 100 may include one or more motor vehicle dealerships 102, 104, and 106. Each of motor vehicle dealerships 102, 104, and 106 may include one or more computers or terminals (e.g., dumb terminals) for entering information about a purchaser or lessee and a desired vehicle to be purchased or leased. For example, each of such computers or terminals may include a web browser or any other type of network interface into which a dealer may fill in fields with the requisite information.

Dealerships 102, 104, and 106 may be communicatively coupled to central processor 116.
Central processor 116 may be any suitable hardware, software, or both, located remote to each of dealerships 102, 104, and 106, within one of dealerships 102, 104, and 106, or may be distributed among two or more of dealerships 102, 104, and 106. Central processor 116 may include database 118 and allocation sub-system 120. Database 118 may be used to store information about vehicle purchasers and lessees, vehicle information, financing provider information, allocation criteria information, any other suitable information, or any combination thereof. Allocation sub-system 120 may be any suitable software, hardware, or both, that may be used for determining whether to enable automatic allocation of a particular vehicle purchase or vehicle lease application to a particular financing source from among two or more finance sources 108, 110, and 112, as well as selecting which one of finance sources 108, 110, and 112 to select if automatic allocation is enabled. In some embodiments, allocation sub-system 120 may be at least partially implemented at one or more of dealerships 102, 104, and 106 (e.g., as a JAVA^{®} applet, an HTML-based web page, etc.).

Dealerships 102, 104, and 106 may be coupled to central processor 116 using any suitable network 114.
For example, network 114 may be a private data network, a public data network (such as the Internet), or a combination of both. Dealerships 102, 104, and 106 may be coupled to network 114 using any suitable wired or wireless communications paths. Finance sources 108, 110, and 112 may be coupled to central processor 116 using any suitable network 114. For example, network 114 may be a private data network, a public data network (such as the Internet), or a combination of both. Finance source 108, 110, and 112 may be coupled to network 114 using any suitable wired or wireless communications paths. In one suitable arrangement, dealerships 102, 104, and 106 may be coupled to central processor 116 using a different network from that which couples finance sources 108, 110, and 112 to central processor 116.

In some suitable embodiments, a dealer at any of dealerships 102, 104, and 106 may access allocation sub-system 120 from a terminal or computer using, for example, a web browser to communicate with central processor 116 over network 114 (e.g., the Internet). For example, when a customer at one of dealerships 102, 104, and 106 desires to lease or finance the purchase of a vehicle, the dealer may input a credit application containing customer information, vehicle information, a desired finance source, any other suitable information, or any combination thereof to central processor 116. Central processor 116 may process this information and communicate with the desired finance source (e.g., via network 114, via facsimile, or via a different network) to obtain financing terms, conditions, incentives, any other suitable information, and any combination thereof from the desired finance source. This information may then be communicated to the dealer.

In one embodiment of the present invention, central processor 116, using, for example, allocation sub-system 120, may process information input by the dealer and criteria information stored in, for example, database 118 to determine whether a submitted credit application finance source should be automatically allocated to a finance source (i.e., notwithstanding the fact that the dealer may have specified a particular desired finance source in the credit application).

FIG. 2 is a flow chart 200 of illustrative steps for identifying a finance source to which the credit application is to be sent. At step 202, central processor 116 may receive the credit application or any other suitable information to be used in securing financing for a customer at a dealership. At step 204, allocation sub-system 120 may process the received information to determine relevant parameters. Relevant parameters may be any one or more parameters that may be used by central processor 116 (e.g., via allocation sub-system 120) to determine whether automatic allocation is to be enabled. Suitable parameters may include, for example, whether the credit application is for a new or used vehicle; the specific vehicle make, model, or style; whether the credit application is a consumer type or commercial type; whether the credit application is for a retail sale, for a lease, or any other suitable type of transaction; any other field of the credit application; or any combination thereof.

In one suitable approach, applicability of automatic allocation may be based at least in part on the finance source selected by the dealer and explicitly identified in the credit application. For example, if the dealer-selected finance source is part of a particular group of available finance sources, then central processor 116 may determine to automatically allocate a finance source. Allocation may be determined according to a group of finance sources whereby the group of finance sources may be any suitable group selected from a pool of finance sources. For example, the group of finance sources among which allocation will be made may be a smaller subset of a larger pool of finance sources. Alternatively, the group of finance sources may be the entire pool of finance sources. The group of finance sources may be predetermined or may be created dynamically by allocation sub-system 120 according to, for example, information contained in the credit application submitted by the dealership.

In one suitable approach, a number of predetermined groups of finance sources (that may overlap) may be predetermined and stored in database 118. A particular one of these groups may be selected for allocation according to, for example, the finance source specified in the credit application.

Whether dynamically created or predetermined, a particular group of finance sources selected for allocation of a credit application may include the finance source specified in the credit application. Alternatively, allocation sub-system 120 may select a group of finance sources for allocation of the credit application that does not include the finance source specified in the credit application.

If, at step 206, central processor 116 determines that the credit application is not subject to for automatic allocation, then central processor 116 may assign the credit application to the finance source specified in the credit application and not perform automatic allocation (step 210). If, at step 206, central processor 116 determines that the credit application is subject to automatic allocation, then central processor may perform the automatic allocation, using for example, allocation sub-system 120, at step 208.

Automatic allocation may be performed based on a predefined group of finance sources. Alternatively, automatic allocation may be performed from a group of finance sources dynamically created from among an overall pool of finance sources according to any one or more parameters, such as those discussed above with respect to applicability criteria.

Allocation sub-system 120 may be programmed to choose a finance source according to any suitable criteria. For example, allocation sub-system 120 may make its selection according to a predefined balance criteria, such as a configurable percentage volume distribution (e.g., 50%/50%, 80%/20%, 40%/40%/20%, etc.). In this example, allocation sub-system 120 may keep a runtime tally of the volume of applications sent to each particular finance source. Allocation decisions may be made according to any other suitable criteria or parameters. For example, any one or more of the criteria discussed above with respect to applicability of automatic allocation may be used in combination with or in place of a percentage volume parameter.

In one suitable approach, a random-number generator or pseudo-random number generator may be employed to allocate a credit application to a particular finance source. For example, a finance source from a group of finance sources may be randomly selected to receive the credit application. In the case of a particular volume distribution, allocation sub-system 120 may be programmed to randomly or pseudo-randomly allocate one of the available finance sources to the credit application while maintaining the desired volume distribution. Alternatively, any round-robin technique, sequential technique, any other suitable technique, or any combination thereof may be used for the automatic allocation.

It should be understood that the steps of flow diagram 200 are merely illustrative. Any of the steps of flow diagram 200 may be modified, omitted, or rearranged, two or more of the steps may be combined, or any additional steps may be added, without departing from the scope of the present invention.

Following allocation of a credit application to a finance source, whether automatically or according to the dealer's specification, the dealer may be notified of the allocation using, for example, network 114.

In some embodiments of the present invention, in determining applicability of automatic allocation or in the automatic allocation process, itself, allocation sub-system 120 may be programmed to determine if the dealer submitting the credit application being processed is attempting to defeat allocation sub-system 120 by resubmitting an identical copy of the credit application, or a new credit application with certain fields modified from a previously submitted credit application (e.g., variances in name or address) in an attempt to have a different finance source allocated.

A computer readable storage medium may tangibly embody a program, functions, and/or instructions that may cause system 100 to operate in a specific and predefined manner as described herein. Those skilled in the art will appreciate, however, that the systems and methods described herein may be implemented at any level, ranging from hardware to software including, but not limited to, firmware, resident software, and microcode.

It will be understood that the present invention may be practiced in any suitable context. The motor vehicle dealership and finance source context discussed above is merely illustrative. Automatic allocation in accordance with the present invention may be applied to any suitable credit context, such as home loan applications, student loan applications, business loan applications, or any other suitable credit context. Automatic allocation in accordance with the present invention may be applied to any other suitable field such as bid selection (e.g., construction contracts) or to any context in which a selection may need to be made from among several choices.

It will be understood that the foregoing is only illustrative of the principles of the invention, and that various modifications may be made by those skilled in the art without departing from the scope and spirit of the invention. Those skilled in the art will appreciate that the invention may be practiced by other than the described embodiments, which are presented for purposes of illustration rather than of limitation, and the invention is limited only by the claims that follow.

## Claims

1. A method for allocating business among a plurality of entities, the method comprising:
electronically receiving, over a computer network at a central processor, information about the business, wherein the information is communicated from a client terminal to the computer network;
at the central processor, electronically processing the information to determine whether the business is capable of being automatically allocated;
if the business is capable of being automatically allocated, electronically processing at least one relevant parameter to identify a provider to which to allocate the business; and
allocating the business to the provider, wherein the allocating comprises electronically communicating at least a subset of the information to the provider over the computer network.

2. The method defined in claim 1 wherein the allocating is based at least in part on a provider explicitly identified in the information about the business.

3. The method defined in claim 1 wherein the received information about the business is used with criteria information stored in a database to determine whether the business should be automatically allocated to a provider.

4. The method defined in claim 1, further comprising:
storing a group of providers in a database at the central processor, wherein the provider is identified from the stored group of providers.

5. The method defined in claim 4 wherein the group of providers is predetermined or dynamically created by the central processor after the information about the business is received.

6. The method defined in claim 1 wherein the business is allocated to the provider according to a balance criteria having a configurable percentage volume distribution between a plurality of providers.

7. The method defined in claim 1, further comprising storing, at the central processor, a counter of the volume of business sent to the provider.

8. The method defined in claim 1 wherein the business is allocated to the provider using a random-number generator or using a sequential algorithm.

9. The method defined in claim 1, further comprising communicating information about the identified provider over the computer network to the client terminal.

10. A system for allocating business among a plurality of entities, the system comprising:
a computer network;
a client terminal coupled to the computer network wherein the client terminal communicates information about the business to the computer network;
a central processor coupled to the computer network and configured to:
receive, over the computer network, the information about the business;
process the information to determine whether the business is capable of being automatically allocated;
if the business is capable of being automatically allocated, process at least one relevant parameter to identify a provider to which to allocate the business; and
allocate the business to the provider, wherein allocating the business comprises communicating at least a subset of the information to the provider over the computer network.

11. The system defined in claim 10 wherein the business is allocated based at least in part on a provider explicitly identified in the information about the business.

12. The system defined in claim 10 wherein the received information about the business is used with criteria information stored in a database to determine whether the business should be automatically allocated to a provider.

13. The system defined in claim 10 wherein the central processor is further configured to:
store a group of providers in a database at the central processor, wherein the provider is identified from the stored group of providers.

14. The system defined in claim 13 wherein the group of providers is predetermined or dynamically created by the central processor after the information about the business is received.

15. The system defined in claim 10 wherein the business is allocated to the provider according to a balance criteria having a configurable percentage volume distribution between a plurality of providers.

16. The system defined in claim 10 wherein the central processor is further configured to store, at the central processor, a counter of the volume of business sent to the provider.

17. The system defined in claim 10 wherein the business is allocated to the provider using a random-number generator or using a sequential algorithm.

18. The system defined in claim 10 wherein the central processor is further configured to communicate information about the identified provider over the computer network to the client terminal.

19. Computer-readable medium for allocating business among a plurality of entities, the computer-readable medium comprising program logic recorded thereon for performing the method of any of claims 1 to 9.
